# EUROPEAN PATENT APPLICATION

(11) **EP 4 717 129 A1**
(43) Date of publication of application: **01.04.2026**
(21) Application number: 24203762.0
(22) Date of filing: 30.09.2024
(51) Int. Cl.: A47G 29/14, G06Q 20/38, G07C 9/00, G07F 9/00, G07F 17/12

(54) **INSULATED THERMAL CABINET SYSTEM FOR PAIRING TAKER AND PLACER AND METHOD THEREOF**

(71) Applicant: Chang, Kai-Chieh, 100 Taipei City (TW)
(72) Inventor: Chang, Kai-Chieh, 100 Taipei City (TW)
(74) Representative: Lang, Christian

(57) **Abstract**

An insulated thermal cabinet system for pairing a taker and a placer and a method thereof are disclosed. In the system, a control server selects insulated thermal cabinet message and storage cell message by verifying an item depositing request, the control server encrypts the insulated thermal cabinet message and the storage cell message with first and second public verification keys into first and second encryption messages, respectively. The control server decrypts the first and the second encryption messages with first and second private verification keys into an insulated thermal cabinet door unlock instruction and a storage cell door open instruction, respectively, so that an insulated thermal cabinet door lock device unlocks the insulated thermal cabinet door based on the insulated thermal cabinet door unlock instruction, and a storage cell door lock device unlocks and opens the storage cell door based on the storage cell door open instruction.

## Description

### BACKGROUND OF THE INVENTION

### 1. Field of the Invention

The present invention is related to an insulated thermal cabinet system and a method thereof, and more particularly to an insulated thermal cabinet system for pairing taker and placer and a method thereof.

### 2. Description of the Related Art

Existing insulated thermal cabinet (such as refrigerator, freezer, heating cabinet...etc.) provides fixed storage space for storing a variety of items, that is, multiple items can be stored in the storage space of the existing insulated thermal cabinet at the same time, and it is unable to provide separate storage spaces for different users to store individual items, so that it is not suitable for public use or shared use.

In a condition that the insulated thermal cabinet is required to provide for multiple users, when one of the users places or takes out an item stored in the storage space, all space of the insulated thermal cabinet space must be opened to an external space, resulting in a large-scale air exchange between an inside space of the insulated thermal cabinet and the external space, which reduces the thermal insulation effect, so the insulated thermal cabinet requires more energy to achieve the thermal insulation effect.

According to above-mentioned contents, what is needed is to develop an improved solution to solve the problem of excessive energy consumption for the insulation effect in the existing insulated thermal cabinet when a user places or takes out an item.

### SUMMARY OF THE INVENTION

An object of the present invention is to provide an insulated thermal cabinet system for pairing taker and placer and a method thereof, to solve the problem of excessive energy consumption for the insulation effect in the existing insulated thermal cabinet when a user places or takes out an item.

To achieve the objective, the present invention provides an insulated thermal cabinet system for pairing a taker and a placer. The insulated thermal cabinet system includes at least one insulated thermal cabinet and a control server, the control server includes a database, a receiving module, a verification module, a selection module, a key generation module, an encryption module, an instruction generation module, and a transmission module.

Each of the at least one insulated thermal cabinet is configured to store an item at a constant temperature, and comprises an insulated thermal cabinet door, an insulated thermal cabinet door lock device, and storage cells, wherein each of the storage cells comprises a storage cell door and a storage cell door lock device.

When the at least one insulated thermal cabinet receives a first private verification key and a second private verification key from an external device of one of a placer and a taker, the at least one insulated thermal cabinet provides the first private verification key and the second private verification key to a control server, wherein when one of the at least one insulated thermal cabinet receives an insulated thermal cabinet door unlock instruction and a storage cell door open instruction from the control server, the insulated thermal cabinet door lock device unlocks the insulated thermal cabinet door based on the insulated thermal cabinet door unlock instruction, and the storage cell door lock device unlocks the storage cell door and opens the storage cell door based on the storage cell door open instruction.

The database is configured to store an insulated thermal cabinet message corresponding to the at least one insulated thermal cabinet, and store storage a cell message corresponding to each of the storage cells of each of the at least one insulated thermal cabinet. The receiving module is configured to receive an item depositing request from the external device of the placer, and receive the first private verification key and the second private verification key from the at least one insulated thermal cabinet, wherein the item depositing request comprises placer information and taker information. The verification module is configured to verify whether payment corresponding to the placer information of the item depositing request is completed. When the item depositing request passes the verification of the verification module, the selection module selects one of the insulated thermal cabinet messages from the database and selects one of at least one selectable storage cell message which corresponds to the selected insulated thermal cabinet message. When the item depositing request passes the verification of the verification module, the key generation module generates a first public verification key, the first private verification key, a second public verification key, and the second private verification key based on the item depositing request. The encryption module is configured to encrypt the selected insulated thermal cabinet message with the first public verification key into a first encryption message, and encrypt the selected storage cell message with the second public verification key into a second encryption message. When the first private verification key received from the at least one insulated thermal cabinet is used to decrypt the insulated thermal cabinet message into the first encryption message and the received second private verification key is used to decrypt the second encryption message into the storage cell message, the instruction generation module generates the insulated thermal cabinet door unlock instruction based on the decrypted insulated thermal cabinet message and generates the storage cell door open instruction based on the decrypted storage cell message. The transmission module is configured to transmit the first private verification key and the second private verification key to the external device of one of the placer and the taker based on the placer information and the taker information in the item depositing request, and transmit the insulated thermal cabinet door unlock instruction and the storage cell door open instruction to a corresponding one of the at least one insulated thermal cabinet.

To achieve the objective, the present invention provides an insulated thermal cabinet method for pairing taker and placer, and the insulated thermal cabinet method includes steps of: providing at least one insulated thermal cabinet to store an item at a constant temperature, wherein each of the at least one insulated thermal cabinet comprises an insulated thermal cabinet door, an insulated thermal cabinet door lock device, and storage cells, and each of the storage cells comprises a storage cell door and a storage cell door lock device; providing a control server comprising an insulated thermal cabinet message corresponding to the at least one insulated thermal cabinet, and a database storing a storage cell message corresponding to each of the storage cells of each of the at least one insulated thermal cabinet; receiving an item depositing request from an external device of a placer, by the control server, wherein the item depositing request comprises placer information and taker information; verifying whether payment corresponding to the placer information of the item depositing request is completed, by the control server; when the item depositing request passes the verification of the control server, selecting one of the insulated thermal cabinet messages from the database, and selecting one of at least one selectable storage cell message which corresponds to the selected insulated thermal cabinet message, by the control server; when the item depositing request passes the verification of the control server, generating a first public verification key, a first private verification key, a second public verification key and a second private verification key based on the item depositing request, by the control server; encrypting the selected insulated thermal cabinet message with the first public verification key into a first encryption message, by the control server; encrypting the selected storage cell message with the second public verification key into a second encryption message, by the control server; transmitting the first private verification key and the second private verification key to an external device taker one of the placer and the taker based on the placer information and the taker information in the item depositing request, respectively, by the control server; when the insulated thermal cabinet receives the first private verification key and the second private verification key from the external device of one of the placer and the taker, providing the first private verification key and the second private verification key to the control server, by the insulated thermal cabinet; when the first private verification key received by the at least one insulated thermal cabinet is used to decrypt the first encryption message into the insulated thermal cabinet message and the received second private verification key is used to decrypt the second encryption message into the storage cell message, generating an insulated thermal cabinet door unlock instruction based on the decrypted insulated thermal cabinet message, and generating the storage cell door open instruction based on the decrypted storage cell message, by the control server; transmitting the insulated thermal cabinet door unlock instruction and the storage cell door open instruction to a corresponding one of the at least one insulated thermal cabinet, by the control server; unlocking the insulated thermal cabinet door based on the insulated thermal cabinet door unlock instruction, by the insulated thermal cabinet door lock device, and unlocking and opening the storage cell door based on the storage cell door open instruction, by the storage cell door lock device.

According to the above-mentioned system and method of the present invention, the difference between the present invention and the conventional technology is that, in the system, the control server selects the insulated thermal cabinet message and the storage cell message by verifying the item depositing request, the control server encrypts the insulated thermal cabinet message with the first public verification key into the first encryption message and encrypts the storage cell message with the second public verification key into the second encryption message, the control server receives a first private verification key and the second private verification key from an insulated thermal cabinet, decrypts the first encryption message with the first private verification key into an insulated thermal cabinet door unlock instruction, and decrypt the second encryption message with the second private verification key into a storage cell door open instruction, and transmit these two instructions back to the insulated thermal cabinet. An insulated thermal cabinet door lock device unlocks the insulated thermal cabinet door based on the insulated thermal cabinet door unlock instruction, and a storage cell door lock device unlocks and opens the storage cell door based on the storage cell door open instruction.

With the above-mentioned solution, the present invention can achieve the efficiency of depositing item in an insulated thermal cabinet individually and unlocking an insulated thermal cabinet door and a storage cell door at the same time.

### BRIEF DESCRIPTION OF THE DRAWINGS

The structure, operating principle and effects of the present invention will be described in detail by way of various embodiments which are illustrated in the accompanying drawings.
FIG. 1 is a block diagram of an insulated thermal cabinet system for pairing taker and placer, according to the present invention.
FIG. 2A is a schematic view of an insulated thermal cabinet for pairing taker and placer, according to the present invention.
FIG. 2B is a schematic view of an insulated thermal cabinet in which an insulated thermal cabinet door and a storage cell door are opened at the same time, according to the present invention.
FIG. 3A to FIG. 3C are flowchart of an insulated thermal cabinet method for pairing taker and placer, according to the present invention.

### DETAILED DESCRIPTION OF THE PREFERRED EMBODIMENTS

The following embodiments of the present invention are herein described in detail with reference to the accompanying drawings. These drawings show specific examples of the embodiments of the present invention. These embodiments are provided so that this disclosure will be thorough and complete, and will fully convey the scope of the invention to those skilled in the art. It is to be acknowledged that these embodiments are exemplary implementations and are not to be construed as limiting the scope of the present invention in any way. Further modifications to the disclosed embodiments, as well as other embodiments, are also included within the scope of the appended claims.

These embodiments are provided so that this disclosure is thorough and complete, and fully conveys the inventive concept to those skilled in the art. Regarding the drawings, the relative proportions, and ratios of elements in the drawings may be exaggerated or diminished in size for the sake of clarity and convenience. Such arbitrary proportions are only illustrative and not limiting in any way. The same reference numbers are used in the drawings and description to refer to the same or like parts. As used herein, the singular forms "a", "an" and "the" are intended to include the plural forms as well, unless the context clearly indicates otherwise.

It is to be acknowledged that, although the terms `first,' 'second,' 'third,' and so on, may be used herein to describe various elements, these elements should not be limited by these terms. These terms are used only for the purpose of distinguishing one component from another component. Thus, a first element discussed herein could be termed a second element without altering the description of the present disclosure. As used herein, the term "or" includes any and all combinations of one or more of the associated listed items.

It will be acknowledged that when an element or layer is referred to as being "on," "connected to" or "coupled to" another element or layer, it can be directly on, connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the words "comprise" and "include," and variations such as "comprises," "comprising," "includes," or "including," will be acknowledged to imply the inclusion of stated elements but not the exclusion of any other elements.

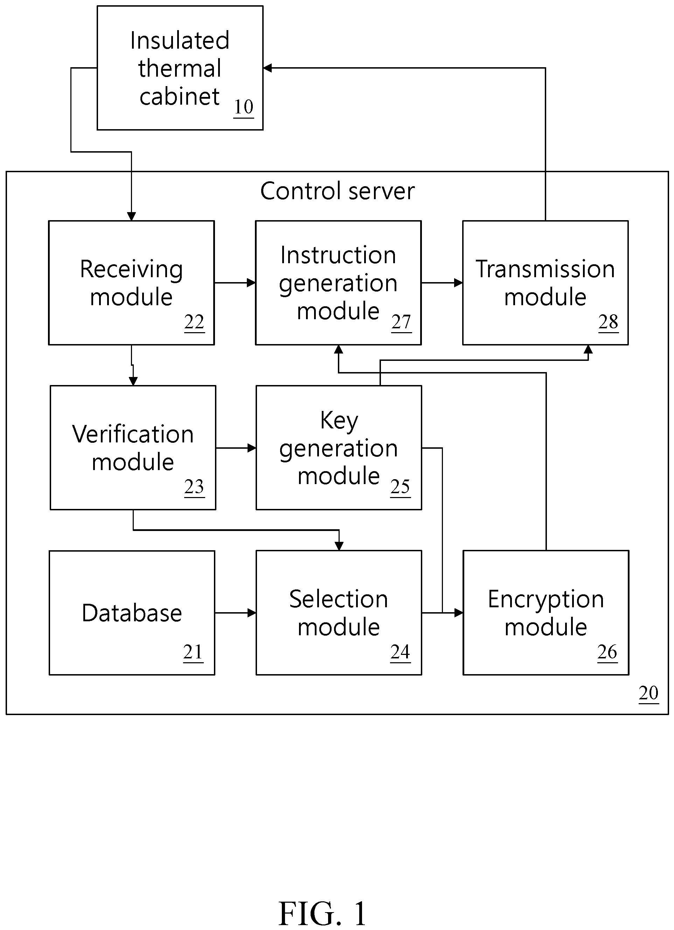

The insulated thermal cabinet system of the present invention will be illustrated in the following paragraphs. Please refer to FIG. 1. FIG. 1 is a block diagram of an insulated thermal cabinet system for pairing taker and placer, according to the present invention.

As shown in FIG. 1, the insulated thermal cabinet system includes at least one insulated thermal cabinet 10 and a control server 20; the control server 20 includes a database 21, a receiving module 22, a verification module 23, a selection module 24, a key generation module 25, an encryption module 26, an instruction generation module 27, and a transmission module 28.

In an embodiment, data transmission between the insulated thermal cabinet 10 and the control server 20 can be performed through a wired transmission manner or a wireless transmission manner, the wired transmission manner can be, for example, a power line network, an optical network, or a transmission cable. The wireless transmission manner can be, for example, WiFi, zigBee, Constrained Application Protocol (CoAP), Message Queuing Telemetry Transport (MQTT), mobile communication network such as 3G, 4G, 5G..., these examples are merely for exemplary illustration, and the application field of the present invention is not limited to these examples.

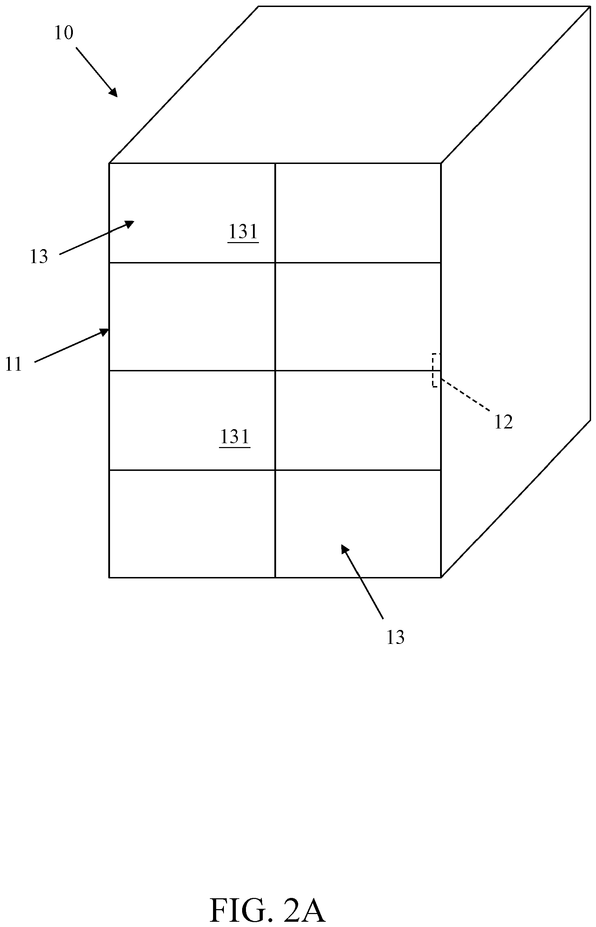

Please refer to FIG. 2A. FIG. 2A is a schematic view of an insulated thermal cabinet of the present invention.

Each insulated thermal cabinet is configured to store an item at a constant temperature, and includes an insulated thermal cabinet door 11, an insulated thermal cabinet door lock device 12, and storage cells 13. Each of the storage cells 13 has a storage cell door 131 and a storage cell door lock device.

The database 21 of the control server 20 stores an insulated thermal cabinet message corresponding to each insulated thermal cabinet 10, and a storage cell message corresponding to each storage cell of each insulated thermal cabinet. When the receiving module 22 of the control server 20 receives an item depositing request, the verification module 23 of the control server 20 verifies the placer information in the item depositing request. It should be noted that the receiving module 22 of the control server 20 receives the item depositing request by using an electronic device through a wired transmission manner or a wireless transmission manner, and the item depositing request contains placer information and taker information, but these examples are merely for exemplary illustration, and the application field of the present invention is not limited to these examples.

The verification module 23 of the control server 20 verifies whether the payment corresponding to the item depositing request is completed, and when a payment process corresponding to the item depositing request is completed, the item depositing request passes the verification performed by the verification module 23 of the control server 20. When the payment process corresponding to the item depositing request is not completed, the item depositing request does not pass the verification performed by the verification module 23 of the control server 20.

When the item depositing request passes the verification performed by the verification module 23 of the control server 20, the selection module 24 of the control server 20 selects one insulated thermal cabinet message from the database 21 of the control server 20 and selects one of selectable storage cell messages which correspond to the selected insulated thermal cabinet message from the database 21.

Particularly, in a condition that the database 21 of the control server 20 stores a first insulated thermal cabinet message "A001" and a second insulated thermal cabinet message "A002", and the storage cell messages corresponding to the first insulated thermal cabinet message "A001" include "A001-1001", "A001-0002", and "A001-1003", and so on; the storage cell messages corresponding to the second insulated thermal cabinet message include "A002-0001", "A002-1002", and "A002-1003", and so on. However, these examples are merely for exemplary illustration, and the application field of the present invention is not limited to these examples.

In a condition that the item depositing request passes the verification performed by the verification module 23 of the control server 20, when the selection module 24 of the control server 20 selects the first insulated thermal cabinet message "A001", the selection module 24 can select the storage cell message "A001-0002" which corresponds to the first insulated thermal cabinet message "A001" and is selectable; however, these examples are merely for exemplary illustration, and the application field of the present invention is not limited to these examples.

In a condition that the placer information passes the verification performed by the verification module 23 of the control server 20, when the selection module 24 of the control server 20 selects the second insulated thermal cabinet message "A002", the selection module 24 can select the storage cell message "A002-0001" which corresponds to the second insulated thermal cabinet message "A002" and is selectable; however, these examples are merely for exemplary illustration, and the application field of the present invention is not limited to these examples.

It should be noted that the receiving module 22 of the control server 20 can receive the insulated thermal cabinet message from the external device (not shown in figures), and the selection module 24 of the control server 20 can select the assigned insulated thermal cabinet message based on the insulated thermal cabinet message received from the external device (not shown in figures) by the receiving module 22 of the control server 20.

The receiving module 22 of the control server 20 can receive device position information from the external device, so that the selection module 24 of the control server 20 can select the insulated thermal cabinet message nearest a position contained in the device position information based on the device position information received from the external device by the receiving module 22 of the control server 20; however, these examples are merely for exemplary illustration, and the application field of the present invention is not limited to these examples.

When the item depositing request passes the verification performed by the verification module 23 of the control server 20, the key generation module 25 of the control server 20 generates a first public verification key, a first private verification key, a second public verification key, and a second private verification key based on the item depositing request. The key generation module 25 of the control server 20 uses the exist key generation manner to generate the first public verification key, the first private verification key, the second public verification key and the second private verification key. It should be noted that the first public verification key and the first private verification key correspond to each other, and the second public verification key and the second private verification key correspond to each other, and the manner of generating the first public verification key and the first private verification key is different from the manner of generating the second public verification key and the second private verification key.

The encryption module 26 of the control server 20 encrypts the selected insulated thermal cabinet message with the first public verification key into the first encryption message and encrypts the selected storage cell message with the second public verification key into the second encryption message.

The transmission module 28 of the control server 20 transmits the first private verification key and the second private verification key based on the item depositing request, the transmission module 28 of the control server 20 can transmit the first private verification key and the second private verification key based on the placer information in the item depositing request through email, SMS, or instant message. The transmission module 28 of the control server 20 can transmit the first private verification key and the second private verification key based on the taker information in the item depositing request through email, SMS, or instant message. However, these examples are merely for exemplary illustration, and the application field of the present invention is not limited to these examples.

When the placer or the taker operates the insulated thermal cabinet 10 to make the insulated thermal cabinet 10 receive the first private verification key and the second private verification key, the insulated thermal cabinet 10 provides the first private verification key and the second private verification key to the control server 20, so that the receiving module 22 of the control server 20 can receive the first private verification key and the second private verification key from the insulated thermal cabinet 10.

The instruction generation module 27 of the control server 20 can use the received key to decrypt the first encryption message, and the instruction generation module 27 of the control server 20 can use the received key to decrypt the second encryption message.

The instruction generation module 27 of the control server 20 uses the received first private verification key to decrypt the first encryption message into the insulated thermal cabinet message, and uses the received second private verification key to decrypt the second encryption message into the storage cell message, so that the instruction generation module 27 of the control server 20 can generate the insulated thermal cabinet door unlock instruction based on the decrypted insulated thermal cabinet message and generate the storage cell door open instruction based on the decrypted storage cell message.

When the instruction generation module 27 of the control server 20 uses the received first private verification key to decrypt the first encryption message into the insulated thermal cabinet message but fail to use the received second private verification key to decrypt the storage cell message, the instruction generation module 27 of the control server 20 does not generate the insulated thermal cabinet door unlock instruction and not generate the storage cell door open instruction.

When the instruction generation module 27 of the control server 20 fails to decrypt the first encryption message into the insulated thermal cabinet message by using the received first private verification key but use the received second private verification key to successfully decrypt the second encryption message into the storage cell message, the instruction generation module 27 of the control server 20 does not generate the insulated thermal cabinet door unlock instruction and not generate the storage cell door open instruction.

When the instruction generation module 27 of the control server 20 fails to use the received first private verification key to decrypt the first encryption message into the insulated thermal cabinet message and also fails to use the received second private verification key to decrypt the storage cell message, the instruction generation module 27 of the control server 20 does not generate the insulated thermal cabinet door unlock instruction and not generate the storage cell door open instruction.

The transmission module 28 of the control server 20 transmits the insulated thermal cabinet door unlock instruction generated by the instruction generation module 27 of the control server 20 based on the decrypted insulated thermal cabinet message and the storage cell door open instruction generated by the instruction generation module 27 based on the decrypted storage cell message, to the insulated thermal cabinet 10.

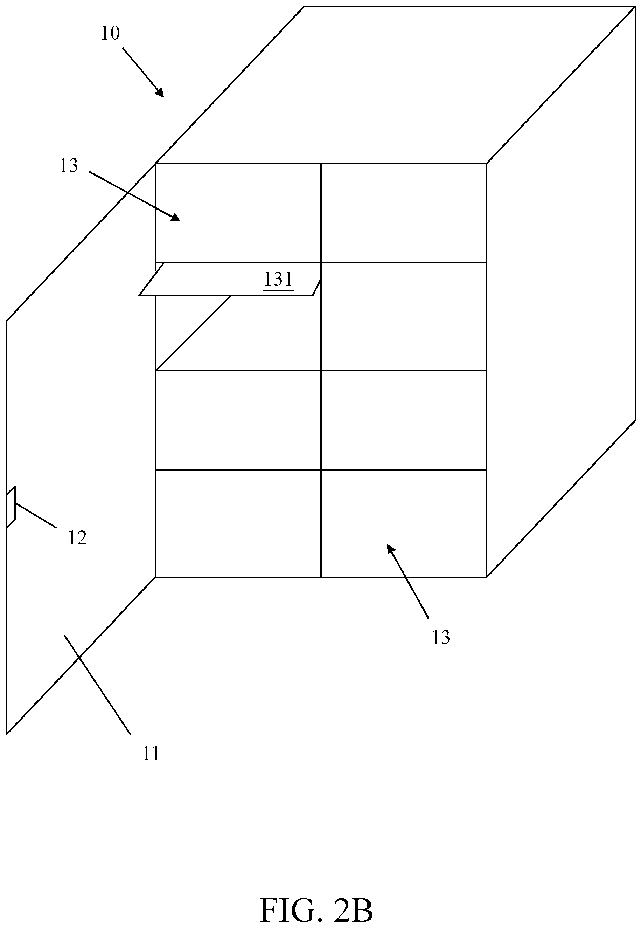

When the insulated thermal cabinet 10 receives the insulated thermal cabinet door unlock instruction and the storage cell door open instruction from the transmission module 28 of a control server 20, the insulated thermal cabinet door lock device 12 unlocks the insulated thermal cabinet door 11 based on the insulated thermal cabinet door unlock instruction, and the corresponding storage cell door lock device unlocks and opens the storage cell door 131 based on the storage cell door open instruction, so that the placer can open the insulated thermal cabinet door 11 to put the item into the storage cell with the storage cell door being opened. Please refer to FIG. 2B. FIG. 2B is a schematic view of an insulated thermal cabinet door and a storage cell door being opened at the same time, according to the present invention. As shown in FIG. 2B, the insulated thermal cabinet door and the storage cell door are opened at the same time, so that a placer can complete the placement of the item or a taker can open the insulated thermal cabinet door 11 to take out the item, which is placed in the storage cell, thereby completing the operation of taking out an item.

It should be noted that, for example, the storage cell door shown in FIG. 2B can be driven to open, close, lock, or unlock by sliding a rail and a motor (now shown in FIG. 2B) disposed in the storage cell; however, these examples are merely for exemplary illustration, and the application field of the present invention is not limited to these examples.

It should be noted that the insulated thermal cabinet 10 can be set with an item depositing preset time; when the insulated thermal cabinet door 11 is opened, the insulated thermal cabinet 10 starts counting an open time, and when the open time reaches the item depositing preset time, the storage cell door lock device is controlled to close and lock the opened storage cell door 131, so that the insulated thermal cabinet door 11 can be prevented from being opened for long periods of time and from causing excessive energy consumption of the insulated thermal cabinet 10 for keeping constant temperature.

In addition, each the storage cell can include a detection device disposed thereon, for example, the detection device can be used to perform an image detection, a weight detection infrared detection, but these examples are merely for exemplary illustration, and the application field of the present invention is not limited to these examples. The detection device is configured to detect whether all item placed in the storage cell is taken out, and when all item placed in the storage cell are taken out and a preset time (such as 5 seconds or 10 second, this example is merely for exemplary illustration, and the application field of the present invention is not limited to this example) elapses, the storage cell door lock device is controlled to close the opened storage cell door 131 and lock the storage cell door 131, so that the insulated thermal cabinet door 11 can be prevented from being opened for long periods of time and from causing excessive energy consumption of the insulated thermal cabinet 10 for keeping constant temperature.

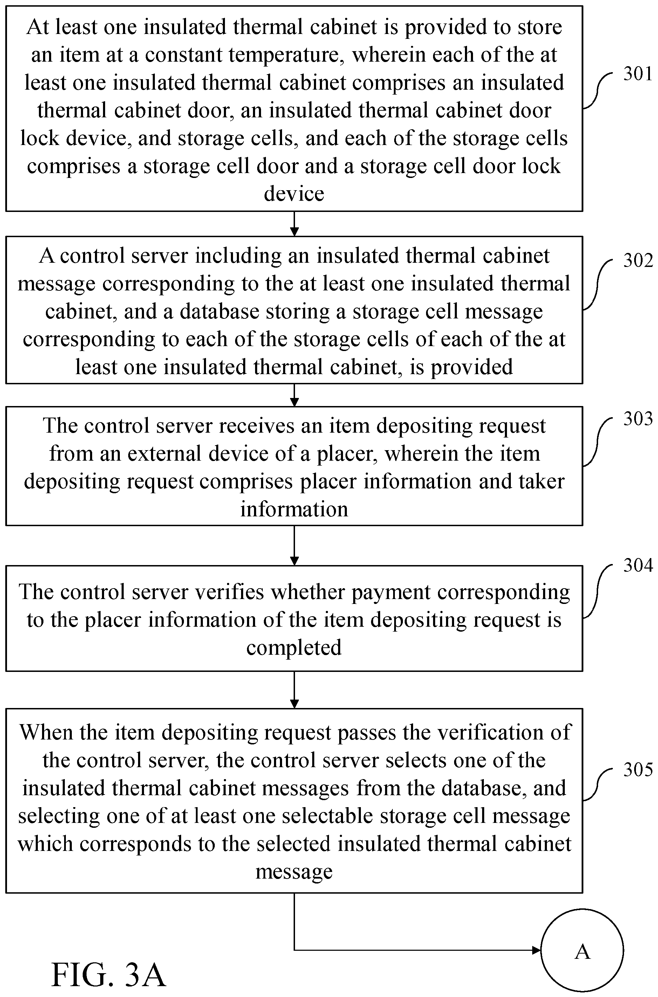

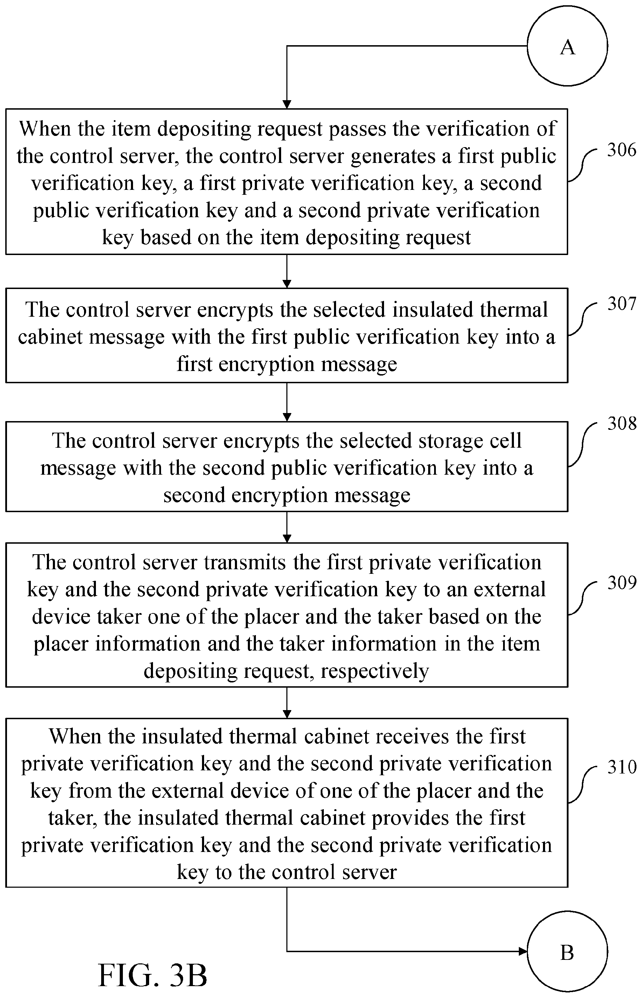

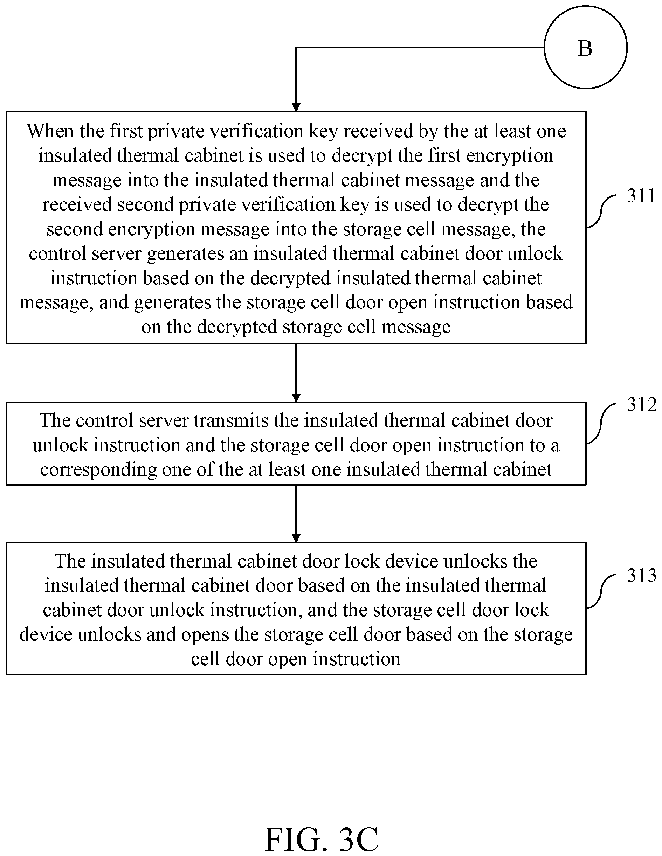

The operation method of the present invention will be illustrated in the following paragraphs. Please refer to FIG. 3A to FIG. 3C. FIG. 3A to FIG. 3C are flowcharts of an insulated thermal cabinet method for pairing taker and placer, according to the present invention. As shown in FIG. 3A to FIG. 3C, the insulated thermal cabinet method includes the following steps.

In a step 301, at least one insulated thermal cabinet is provided to store an item at a constant temperature, wherein each of the at least one insulated thermal cabinet comprises an insulated thermal cabinet door, an insulated thermal cabinet door lock device, and storage cells, and each of the storage cells comprises a storage cell door and a storage cell door lock device. In a step 302, a control server including an insulated thermal cabinet message corresponding to the at least one insulated thermal cabinet, and a database storing a storage cell message corresponding to each of the storage cells of each of the at least one insulated thermal cabinet, is provided. In a step 303, the control server receives an item depositing request from an external device of a placer, wherein the item depositing request comprises placer information and taker information. In a step 304, the control server verifies whether payment corresponding to the placer information of the item depositing request is completed.

In a step 305, when the item depositing request passes the verification of the control server, the control server selects one of the insulated thermal cabinet messages from the database, and selecting one of at least one selectable storage cell message which corresponds to the selected insulated thermal cabinet message. In a step 306, when the item depositing request passes the verification of the control server, the control server generates a first public verification key, a first private verification key, a second public verification key and a second private verification key based on the item depositing request. In a step 307, the control server encrypts the selected insulated thermal cabinet message with the first public verification key into a first encryption message. In a step 308, the control server encrypts the selected storage cell message with the second public verification key into a second encryption message. In a step 309, the control server transmits the first private verification key and the second private verification key to an external device taker one of the placer and the taker based on the placer information and the taker information in the item depositing request, respectively. In a step 310, when the insulated thermal cabinet receives the first private verification key and the second private verification key from the external device of one of the placer and the taker, the insulated thermal cabinet provides the first private verification key and the second private verification key to the control server. In a step 311, when the first private verification key received by the at least one insulated thermal cabinet is used to decrypt the first encryption message into the insulated thermal cabinet message and the received second private verification key is used to decrypt the second encryption message into the storage cell message, the control server generates an insulated thermal cabinet door unlock instruction based on the decrypted insulated thermal cabinet message, and generates the storage cell door open instruction based on the decrypted storage cell message. In a step 312, the control server transmits the insulated thermal cabinet door unlock instruction and the storage cell door open instruction to a corresponding one of the at least one insulated thermal cabinet. In a step 313, the insulated thermal cabinet door lock device unlocks the insulated thermal cabinet door based on the insulated thermal cabinet door unlock instruction, and the storage cell door lock device unlocks and opens the storage cell door based on the storage cell door open instruction.

According to above-mentioned contents, the difference between the present invention and the conventional technology is that, in the system, the control server selects the insulated thermal cabinet message and the storage cell message by verifying the item depositing request, the control server encrypts the insulated thermal cabinet message with the first public verification key into the first encryption message and encrypts the storage cell message with the second public verification key into the second encryption message, the control server receives a first private verification key and the second private verification key from an insulated thermal cabinet, decrypts the first encryption message with the first private verification key into an insulated thermal cabinet door unlock instruction, and decrypt the second encryption message with the second private verification key into a storage cell door open instruction, and transmit these two instructions back to the insulated thermal cabinet. An insulated thermal cabinet door lock device unlocks the insulated thermal cabinet door based on the insulated thermal cabinet door unlock instruction, and a storage cell door lock device unlocks and opens the storage cell door based on the storage cell door open instruction.

With the above-mentioned solution, the present invention can solve the problem of excessive energy consumption for the insulation effect in the existing insulated thermal cabinet when a user places or takes out an item, thereby achieving the efficiency of depositing item in an insulated thermal cabinet individually and unlocking an insulated thermal cabinet door and a storage cell door at the same time.

The present invention disclosed herein has been described by means of specific embodiments. However, numerous modifications, variations and enhancements can be made thereto by those skilled in the art without departing from the spirit and scope of the disclosure set forth in the claims.

## Claims

1. An insulated thermal cabinet system for pairing a taker and a placer, comprising:
at least one insulated thermal cabinet, wherein each of the at least one insulated thermal cabinet is configured to store an item at a constant temperature, and comprises an insulated thermal cabinet door, an insulated thermal cabinet door lock device, and storage cells, wherein each of the storage cells comprises a storage cell door and a storage cell door lock device;
wherein when the at least one insulated thermal cabinet receives a first private verification key and a second private verification key from an external device of one of a placer and a taker, the at least one insulated thermal cabinet provides the first private verification key and the second private verification key to a control server, wherein when one of the at least one insulated thermal cabinet receives an insulated thermal cabinet door unlock instruction and a storage cell door open instruction from the control server, the insulated thermal cabinet door lock device unlocks the insulated thermal cabinet door based on the insulated thermal cabinet door unlock instruction, and the storage cell door lock device unlocks the storage cell door and opens the storage cell door based on the storage cell door open instruction; and
wherein the control server comprises:
a database, configured to store an insulated thermal cabinet message corresponding to the at least one insulated thermal cabinet, and store storage a cell message corresponding to each of the storage cells of each of the at least one insulated thermal cabinet;
a receiving module, configured to receive an item depositing request from the external device of the placer, and receive the first private verification key and the second private verification key from the at least one insulated thermal cabinet, wherein the item depositing request comprises placer information and taker information;
a verification module, configured to verify whether payment corresponding to the placer information of the item depositing request is completed;
a selection module, wherein when the item depositing request passes the verification of the verification module, the selection module selects one of the insulated thermal cabinet messages from the database and selects one of at least one selectable storage cell message which corresponds to the selected insulated thermal cabinet message;
a key generation module, wherein when the item depositing request passes the verification of the verification module, the key generation module generates a first public verification key, the first private verification key, a second public verification key, and the second private verification key based on the item depositing request;
an encryption module, configured to encrypt the selected insulated thermal cabinet message with the first public verification key into a first encryption message, and encrypt the selected storage cell message with the second public verification key into a second encryption message;
an instruction generation module, wherein when the first private verification key received from the at least one insulated thermal cabinet is used to decrypt the insulated thermal cabinet message into the first encryption message and the received second private verification key is used to decrypt the second encryption message into the storage cell message, the instruction generation module generates the insulated thermal cabinet door unlock instruction based on the decrypted insulated thermal cabinet message and generates the storage cell door open instruction based on the decrypted storage cell message; and
a transmission module, configured to transmit the first private verification key and the second private verification key to the external device of one of the placer and the taker based on the placer information and the taker information in the item depositing request, and transmit the insulated thermal cabinet door unlock instruction and the storage cell door open instruction to a corresponding one of the at least one insulated thermal cabinet.

2. The insulated thermal cabinet system for pairing taker and placer according to claim 1, wherein the receiving module receives the insulated thermal cabinet message from the external device, the selection module selects the assigned insulated thermal cabinet message based on the insulated thermal cabinet message received by the receiving module, or the receiving module receives the device position information from the external device, the selection module selects one of the at least one insulated thermal cabinet in the insulated thermal cabinet message nearest a position contained in the device position information.

3. The insulated thermal cabinet system for pairing taker and placer according to claim 1, wherein the insulated thermal cabinet is set with an item depositing preset time, when the insulated thermal cabinet door is opened, the insulated thermal cabinet starts to count an open time, wherein when the open time reaches the item depositing preset time, the storage cell door lock device is controlled to close and lock the opened storage cell door.

4. The insulated thermal cabinet system for pairing taker and placer according to claim 1, wherein each of the storage cells comprises a detection device disposed thereon, the detection device is configured to detect whether all of items placed in the storage cell is taken out, and after all of the items placed in the storage cell is taken out and a preset time then elapses, the storage cell door lock device is controlled to close and lock the opened storage cell door.

5. The insulated thermal cabinet system for pairing taker and placer according to claim 4, the detection device comprises at least one of an image detection device, a weight detection device, and an infrared detection device.

6. An insulated thermal cabinet method for pairing a taker and a placer, comprising:
providing at least one insulated thermal cabinet to store an item at a constant temperature, wherein each of the at least one insulated thermal cabinet comprises an insulated thermal cabinet door, an insulated thermal cabinet door lock device, and storage cells, and each of the storage cells comprises a storage cell door and a storage cell door lock device;
providing a control server comprising an insulated thermal cabinet message corresponding to the at least one insulated thermal cabinet, and a database storing a storage cell message corresponding to each of the storage cells of each of the at least one insulated thermal cabinet;
receiving an item depositing request from an external device of a placer, by the control server, wherein the item depositing request comprises placer information and taker information;
verifying whether payment corresponding to the placer information of the item depositing request is completed, by the control server;
when the item depositing request passes the verification of the control server, selecting one of the insulated thermal cabinet messages from the database, and selecting one of at least one selectable storage cell message which corresponds to the selected insulated thermal cabinet message, by the control server;
when the item depositing request passes the verification of the control server, generating a first public verification key, a first private verification key, a second public verification key and a second private verification key based on the item depositing request, by the control server;
encrypting the selected insulated thermal cabinet message with the first public verification key into a first encryption message, by the control server;
encrypting the selected storage cell message with the second public verification key into a second encryption message, by the control server;
transmitting the first private verification key and the second private verification key to an external device taker one of the placer and the taker based on the placer information and the taker information in the item depositing request, respectively, by the control server;
when the insulated thermal cabinet receives the first private verification key and the second private verification key from the external device of one of the placer and the taker, providing the first private verification key and the second private verification key to the control server, by the insulated thermal cabinet;
when the first private verification key received by the at least one insulated thermal cabinet is used to decrypt the first encryption message into the insulated thermal cabinet message and the received second private verification key is used to decrypt the second encryption message into the storage cell message, generating an insulated thermal cabinet door unlock instruction based on the decrypted insulated thermal cabinet message, and generating the storage cell door open instruction based on the decrypted storage cell message, by the control server;
transmitting the insulated thermal cabinet door unlock instruction and the storage cell door open instruction to a corresponding one of the at least one insulated thermal cabinet, by the control server; and
unlocking the insulated thermal cabinet door based on the insulated thermal cabinet door unlock instruction, by the insulated thermal cabinet door lock device, and unlocking and opening the storage cell door based on the storage cell door open instruction, by the storage cell door lock device.

7. The insulated thermal cabinet method for pairing taker and placer according to claim 6, wherein the control server receives the insulated thermal cabinet message from the external device to select the assigned insulated thermal cabinet message, or the control server receives device position information from the external device to select the insulated thermal cabinet message nearest a position contained in the device position information.

8. The insulated thermal cabinet method for pairing taker and placer according to claim 6, wherein the insulated thermal cabinet is set with an item depositing preset time, when the insulated thermal cabinet door is opened, the insulated thermal cabinet starts to count an open time, wherein when the open time reaches the item depositing preset time, the storage cell door lock device is controlled to close and lock the opened storage cell door.

9. The insulated thermal cabinet method for pairing taker and placer according to claim 6, wherein each of the storage cells comprises a detection device disposed thereon, the detection device is configured to detect whether all of items placed in the storage cell is taken out, and after all of the items placed in the storage cell is taken out and a preset time then elapses, the storage cell door lock device is controlled to close and lock the opened storage cell door.

10. The insulated thermal cabinet method for pairing taker and placer according to claim 9, wherein the detection device comprises at least one of an image detection device, a weight detection device, and an infrared detection device.
